Europäisches Patentamt

European Patent Office

Office européen des brevets

(11) Publication number: **0 243 139 B1**

# EUROPEAN PATENT SPECIFICATION

(45) Date of publication of patent specification: **30.11.94**   (51) Int. Cl.5: **G01N 21/35**

(21) Application number: **87303466.4**

(22) Date of filing: **21.04.87**

(54) **Method and apparatus for gas analysis.**

(30) Priority: **19.04.86 GB 8609619**

(43) Date of publication of application:
**28.10.87 Bulletin 87/44**

(45) Publication of the grant of the patent:
**30.11.94 Bulletin 94/48**

(84) Designated Contracting States:
**AT BE CH DE ES FR GB GR IT LI LU NL SE**

(56) References cited:
**DE-A- 3 402 800**
**FR-A- 2 556 838**
**JP-A-61 048 736**
**US-A- 4 632 563**

**APPLIED OPTICS, vol. 15, no. 5, May 1976,
pages 1222-1228; W.F. HERGET et al.: "In-
frared gasfilter correlation instrument for in
situ measurement of gaseous pollutant con-
centrations"**

(73) Proprietor: **PROCAL ANALYTICS LIMITED
9 Alfric Square
Maxwell Road
Woodston
Peterborough Cambridgeshire PE2 0JP (GB)**

(72) Inventor: **Hutchinson, Robin John
13 Burghley Road
Peterborough Cambridgeshire PE1 2OA (GB)**

(74) Representative: **Archer, Philip Bruce et al
Urquhart-Dykes & Lord
European Patent Attorneys
New Priestgate House
57 Priestgate
Peterborough Cambridgeshire PE1 1JX (GB)**

## Description

This invention relates to a method and apparatus for gas analysis . An example of the application of the invention is to the analysis of stack gases by use of infra-red radiation. The invention is also applicable to other types of gas analysis apparatus employing other radiation frequencies , including those in the ultra-violet part of the spectrum.

In the case of stack gas analysis apparatus , previous proposals are based upon the technique of passing radiation through the gas to be analysed and measuring the intensity of the radiation and thereby obtaining data permitting calculation of the concentration of known constituents of the stack gases.

Less recent prior proposals were for double-sided apparatus requiring intensity measurement devices on both sides of a gas stack , to enable measurements to be made which reduce or eliminate the effect of time-variable physical imperfections in the apparatus , such as the presence of dust etc. on radiation transmitting components . More recent proposals have permitted comparable results to be obtained by ratiometric calculations based upon measurements employing a single radiation beam operating at two frequencies by means of rotating narrow band filters. It has also been proposed to provide single-sided apparatus in which the radiation beam traverses the length of a probe and is reflected back at the end of the probe by means of a mirror for subsequent analysis.

There is disclosed in FR-A-2,556,838 analysis apparatus in which there is provided a datum wheel carrying datum elements in the form of a mirror, a window and an absorptive area.

There is also disclosed in Applied Optics volume 15, number 5, pages 1222-1228, gas analysis equipment in which there is provided a calibration cell filled with the particular gas to be analysed. DE-A-3 402 800 discloses a gas analysis apparatus operating on the principle of gas filter correlation in which a cell containing the gas to be measured and a plurality of cells containing reference gases are mounted in the optical path from source to detector, on a rotable wheel.

The precharacterising portion of claim 1 hereof is based on this latter disclosure.

Nevertheless, in all these previous proposals there is a need for facilities to calibrate the apparatus, or re-check its span and the zero of its output scale, thereby to maintain the confidence of the user.

Prior proposals in this respect largely centre around the provision of means for filling the apparatus with a standard or known gas for the purpose. This technique is in any case somewhat slow and laborious and moreover with previously proposed apparatus the requirement to make the datum measurements in the presence substantially only of the standard or known gas conflicts with the requirement for efficient entry of the stack gases into the measuring apparatus during normal use of the latter.

A further shortcoming of previously proposed apparatus relates to the techniques employed for avoidance or reduction of misting and the like on radiation transmitting components such as lenses, during gas analysis. Previously proposed techniques employ currents of relatively dry air passed over the relevant components. However, these techniques are not readily applicable to apparatus where the efficient passage of stack gases into a sampling probe must not be interfered with. Therefore, some improvements in these techniques are called for.

An object of the invention is to provide gas analysis apparatus and a method of using same offering improvements in relation to one or more of the matters discussed above, or generally.

According to the invention there is provided gas analysis apparatus as defined in claim 1 of the accompanying claims and a method of gas analysis as defined in claim 6 thereof.

In an embodiment described below, a process gas analyser operates in the infra-red region of the electro-magnetic spectrum and is capable of continuously measuring the concentrations of up to three infra-red absorbing components in a gas stream. The technique utilizes a relationship of concentration being a function of the amount of radiation absorbed, according to the expression :

Concentration = $f(I/I_0)$

Where $I_0$ and $I$ are the intensities before and after absorption.

The apparatus measures the gas concentration of each component of the gas stream by comparing the different amounts of radiation absorbed at different radiation wavelengths each chosen with a view to producing absorption by one gas component and not by the others.

A special optical head is inserted into the gas stream , which may be a flue stack , a process vessel , or a process pipe .

The optical head or probe is protected by a porous tube which permits gases to pass into it and thus into the path of the infra-red radiation, but which keeps out particulate matter . A range of different porosities is provided for different applications . The porous tube is constructed from a non-corrodible material having regard to the gases concerned .

In the embodiment , the beam of infra-red radiation passes from its source through a rotating optical filter wheel which , for each gas to be analysed , selects a measuring and a reference wavelength . These wavelengths then pass through the datum means , or reference value radiation transmission means , which has a series of datum elements comprising gas cells , one for each gas component to be analysed , a mirror to return the beam to an infra-red detector , and an orifice to pass the beam unaffected into the probe . A focusing lens directs the beam lengthwise of the probe tube to a retro-reflector mirror at its far end which returns the radiation back through the lens for a second time to a point offset from the original optical path , where an infra-red detector is located . The radiation received by the detector or sensor is dependent on :

a) the wavelengths ( measuring or reference ) chosen for each gas component ;

b) the setting of the datum means ; and

c) the gas content of the probe .

An embodiment of the invention will now be described by way of example with reference to the accompanying drawings in which :

Fig. 1 shows a longitudinal section through gas analysis apparatus ;

Fig. 2 shows , diagrammatically , an elevation view of a filter wheel of the apparatus of Fig. 1 ;

Fig. 3 shows , diagrammatically , an elevation view of a datum or reference value wheel of the apparatus of Fig. 1 ;

Figs. 4 and 5 show , in square wave form format , the radiation intensity measurements obtained by the apparatus of Fig. 1 both in the hole ( H ) and gas ( G ) positions ( Fig. 4 ) and the mirror position ( M ) ( Fig. 5 ) for the datum wheel of Fig. 3 ; and

Fig. 6 shows a plot of intensity ratio measurements against gas concentration as obtained by the apparatus .

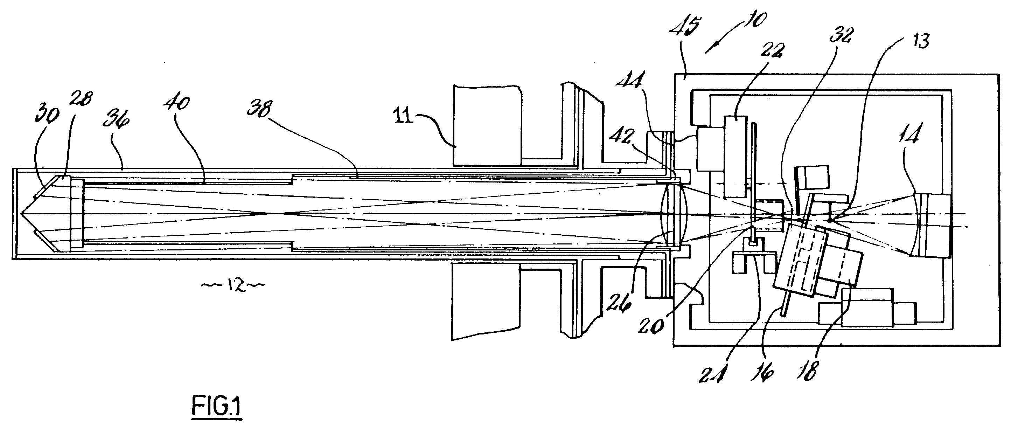

As shown in Fig. 1 , stack gas analysis apparatus 10 mounted in the side wall 11 of a stack through which gas 12 to be analysed is passing , comprises an infra-red source 13 from which radiation passes to a concave mirror 14 and thence via a filter wheel 16 driven by a motor 18 to a datum wheel 20 operable by an index drive motor 22 under the control of signals from an optical switch 24 sensing the position of wheel 20 by means of markers ( not shown ) thereon .

A lens 26 receives the radiation from datum wheel 20 and transmits it to a mirror block 28 having a mirror 30 which reflects the radiation back through lens 26 and datum wheel 20 and hence to an infra-red detector 32 .

Lens 26 is mounted at the inlet end of a porous probe tube 36 having mirror 30 at its other end. Tube 36 comprises a sintered metal matrix having an inner tube 38 with a copper insert 40.

Lens 26 is mounted on a copper ring 42 having an insulating mount 44 connecting it to the housing 45 for the optical apparatus and abutting flanges of the inner tube and the sintered tube .

The copper ring 42 is electrically heated by means of an annular heating element , and the temperature is controlled.

The infra-red detector or sensor 32 produces a square wave form which is applied to an analogue to digital convertor ( not shown ) which measures the height of the wave form at positions located each side of the peaks and troughs therein . This enables calculation of the average pulse heights and also enables averaging out of noise , which effectively removes noise and avoids the need for a series of readings whereby the capacity of the data processing micro-processor can be smaller.

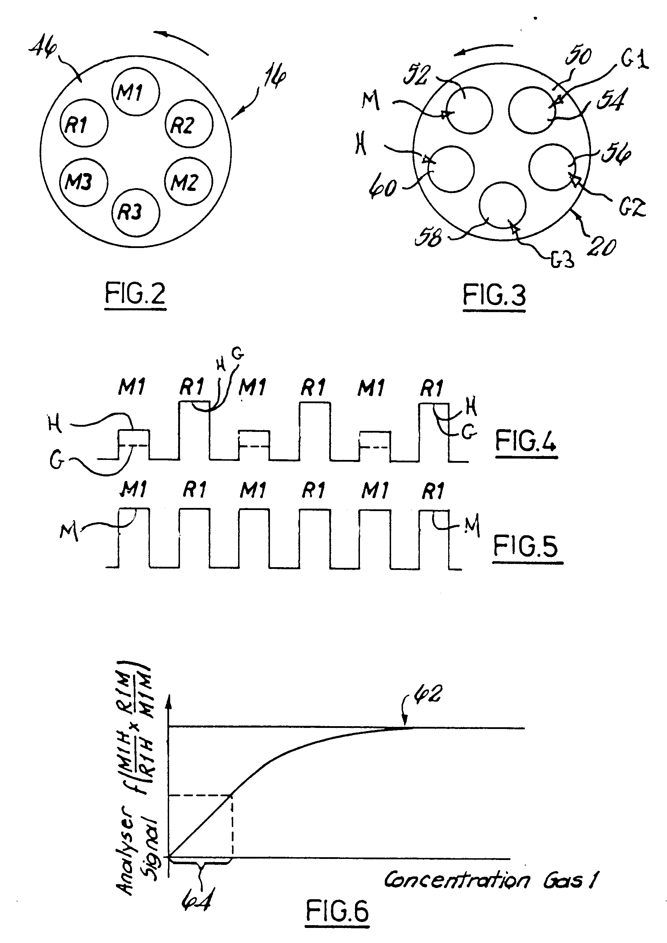

As shown in Fig. 2 , filter wheel 16 comprises three pairs of filter discs . Each pair consists of a measuring filter ( M ) and a reference filter ( R ). They transmit a narrow band of wavelengths . Each pair of filters M1,R1 ; M2,R2 and M3,R3 is chosen according to its own one of the three gas contituents to be analysed . They transmit at different wavelengths whereby ratiometric compensation for equipment variables can be made as explained above . The measurement frequencies transmitted by the measuring filters are each chosen to produce a suitable degree of absorption while the reference frequencies are chosen to produce less or zero absorption . The filter wheel 16 rotates at a suitable speed up to about 1,000 revolutions per minute . Markers ( not shown ) such as slots may be cut in the body of filter wheel 16 to enable rotation of the filter wheel to be monitored and timed by means of switch 24 with respect to the output of sensor 20 .

As shown in Fig. 3 , datum wheel 20 comprises a support 50 carrying four datum elements in the form of a mirror 52 and cells 54,56,58 for gases 1,2,and 3 to be analysed. In addition , a hole or aperture 60 is also formed in the support 50 .

Each gas cell 54,56,58 comprises a radiation-transmitting transparent cell containing a suitable concentration of a reference gas and mounted over an aperture in the support 50 whereby radiation can pass through the cell and the aperture and pass onwards to lens 26 . The gases G1 , G2 and G3 in the cells 54,56 and 58 respectively are chosen with regard to the gases to be analysed by the apparatus . In this embodiment , each cell contains a high concentration of a respective one of the actual stack gas components to be analysed.

It will now be understood that the provision of filter wheel 16 in combination with datum wheel 20 enables the apparatus 10 to provide the three radiation intensity measurements ( one with datum wheel 20 in the gas 1 position of cell 54 , one in the hole position 60 , and one in the mirror position 52 ) for each of the three gas components in the stack gas to be analysed . These measurements will be identified below by the suffix G for the gas cell , H for the hole , and M for the mirror. Moreover , each of these measurements can be made at two frequencies ( measurement and reference ) as produced by the pairs of filter discs M1,R1 ; M2,R2 ; and M3,R3 on filter disc 16 . The transmission frequencies of filter discs M1 and R1 , and the absorption characteristics of gas 1 in datum cell 54 are chosen with regard to the characteristics of the first gas to be analysed by the apparatus in the gas stream , and likewise the filter discs M2,R2 and gas cell 56 for the second gas component , and so on. Thus , six intensity measurements are made for each of the three gases to be analysed , and these can be identified as follows :

M1,M(M1 position of filter wheel and mirror position of datum wheel 20 ) ;

M1,H ( M1 position of filter wheel 16 and hole position of datum wheel 20 ) ;

M1,G ( M1 position of filter wheel and gas 1 position of datum wheel 20 ;

R1,M ( R1 position of filter wheel 16 and mirror position of datum wheel 20 ) ;

R1,H ( R1 position of filter wheel 16 and hole position of datum wheel 20 ) ;

R1,G ( R1 position of filter wheel 16 and gas 1 position of datum wheel 20 .

Likewise , six other intensity measurements are available for M2,R2 , in the gas 2 and the hole and mirror positions , and likewise for gas 3 .

It will be understood that in the mirror position of datum wheel 20 , the intensity measurements are effectively a standard or datum value which can be used as a reference for the other intensity measurements in which the radiation passes through the optical components of the apparatus and the gas to be analysed. Thus , the measurements in the mirror position are effectively an intensity measurement of the emission from the infra-red source 12 , with zero absorportion by the gas to be analysed. This is shown in Fig. 5 for gas 1 . M designates the mirror value of the intensity . The intensity is the same at both the reference and measurement frequencies.

In the hole position of datum wheel 20 , the radiation is unaffected by the latter , and thus this intensity measurement provides a direct measure of the radiation absorption by the gas in the probe tube 34. This is shown in Fig.4 by the intensities H . These are greater for the reference frequency than for the measurement frequency .

In the gas 1 position of datum wheel 20 ( or gas 2 or gas 3 ) the radiation passes directly through the gas contained in the cells 54, or 56 , or 58. These gases are in fact high concentrations of the respective stack gas components to be analysed , so as to produce datum points 62 ( see Fig. 6 ) far out on the concentration scale. Effectively this measurement is a maximum scale value check since at this point on the scale the measurement is little affected by the presence of gases in the probe 34. In Fig. 4 this is shown by the values G. At the measurement frequency ( M ) this value is significantly less than the H value of course. At the reference frequency ( R ) the value is the same as the H value because the reference frequency is chosen for that purpose - to provide little or no absorption .

In use , the apparatus is inserted into the flue stack 11 or other duct or vessel , so that porous tube 36 is exposed to the gas stream to be analysed. The latter passes through the pores into the tube and intercepts the radiation passing back and forth through the tube . The signal processing apparatus connected to the infra-red detector 32 processes the intensity readings and produces direct digital readouts of the gas concentrations corresponding to gases 1 , 2 and 3 in the gas stream .

The basis of the calculation of concentration is the following expression :

Concentration gas 1 = f 1,1 ( M1,H/R1,H ) x ( R1,M/M1,M ) + f 1,2 (M2,H/R2,H ) x ( R2,M/M2,M ) + f 1,3 (M3,H/R3,H ) x ( R3,M/M3,M ) + offset ( due to other gases ).

In the above expression , the major term is that involving f1,1 . It will be appreciated that the term M1,H/R1,H corresponds to the intensity of the beam after absorption by the gas under test , and that the expression R1,M /M1,M corresponds to the intensity of the beam in the mirror position with no gas absorption. Effectively , these are ratiometric counterparts of the fundamental expression discussed above , that concentration = $f(I/I_o)$ where I and $I_o$ are the radiation intensities before and after the absorption by the gas .

The functions f1,1 and f1,2 and f1,3 etc. are measured during calibration and stored in the memory of the microprocessor . They may exist as tabulated numbers rather than mathematical expressions.

In Fig. 6 the intensity measurements corresponding to the main concentration term in the above equation are plotted against the gas concentration. The measurement range of the instrument is indicated by the reference numeral 64 .

It will be appreciated that the mirror position of the datum wheel 20 effectively monitors the infra-red output signal with respect to drift of the apparatus. The use of the datum cells 54,56 and 58 provides datum points of reference for calculation purposes without the need to introduce a standard gas into the probe tube. Nevertheless , this latter procedure can be carried out and is facilitated by the porous nature of the tube 36 whereby complete filling with a reference gas such as nitrogen is readily accomplished together with flushing out of previously present gases .

Among other modifications which could be made in the above embodiment while remaining within the scope of the invention is the use of alternative radiation frequencies such as ultra-violet and near infra-red, with appropriate changes in the radiation source and the radiation sensor. The apparatus can also be used without the gas cells . These latter become of considerable importance when measuring stack gases at low concentrations , in which situation cross-interference between the measurement signals can cause difficulties. However , in less critical analysis situations , adequate accuracy may be achievable using merely the mirror as the reference datum.

In a further embodiment , not illustrated , provision is made for avoiding misting up of the lens 26 by means of an electrical-band type heater which is wrapped around the lens , whereby the latter is maintained at a temperature of approximately 100 degrees Celsius . Similar heating means may be provided for others of the optical components in the apparatus for a similar purpose. The purpose of heating these optical components is to raise their temperatures with respect to the temperatures which they would otherwise be at , whereby the tendency for condensation from the ambient gases or atmosphere to occur is reduced. Alternative electrical resistance heaters may be employed. In the described embodiment , a conductive tube from the gas stack to the lens is provided , the lens 26 being mounted in a heat conducting tube 42 which is thermally insulated from the optical casing .

**Claims**

1.  Gas analysis apparatus comprising :

    a) a radiation source (13) arranged to transmit radiation through a gas (12) to be analyzed;

    b) a radiation sensor (32) arranged to receive radiation from said source to permit analysis of said gas (12);

    c) datum means (50-60) positionable to intercept radiation from said source and to transmit the radiation to said sensor at a reference or datum value to permit analysis of said gas (12); and

    d) said datum means (50-60) comprising a rotatable datum wheel (20) having datum elements (52,62) to intercept periodically said radiation as said datum wheel rotates, thereby to permit said analysis of said gas and;

    e) said rotatable datum wheel (20) includes in said datum means (50, 60) at least one gas-containing radiation - transmitting cell (54, 56, 58) positioned on said wheel to present said cell to intercept said radiation from said source periodically as said wheel rotates, whereby the radiation transmitted through said cell permits calibration of said apparatus with respect to said gas to be analysed,

    characterised in that said datum means (52,60) comprises a mirror (52) or like radiation reflection or transmission means, to reflect or transmit radiation direct to said sensor without passing through said sample.

2.  Apparatus according to claim 1 or claim 2 characterised in that said datum means (50-60) is positioned to intercept said radiation before and after the latter passes through the gas to be analysed.

3.  Apparatus according to any one of the preceding claims characterised in that said datum means comprises aperture means (60) whereby said radiation can pass to said sensor unaffected thereby.

4.  Apparatus according to any one of claims 1 to 3 characterised by a probe member (36) insertable into a flow of gas to be analysed, said probe member (36) comprising a porous material which is permeable to said gas (12) to be analysed while restricting the ingress of particulate matter, and said probe (12) being adapted to receive said radiation for analysis of said gas (12) thereby.

5.  Apparatus according to any of the preceding claims characterised by radiation transmission means (26) to receive radiation from said source (13) and to transmit it towards said radiation sensor (32), said radiation transmission means (26) being provided with heating means (42) to raise its temperature during use.

6.  A method of gas analysis using the apparatus according to claim 1.

7.  A method according to claim 6 characterised by the steps of employing said datum means (50-60) to obtain a series of values relating to the intensity of said radiation as sensed by said radiation sensor (32) in at least two different conditions, namely :

a) a standard or datum value (M) in which a mirror or like optical device of the datum means directly reflects or transmits said radiation to the sensor without passing through the gas to be analysed, or without passing through the main body thereof; and

b) a measurement value (H) in which the radiation is permitted to pass through the gas (12) to be analysed and a degree of absorption thereby occurs;

said measurements being carried out at two frequencies (M1, R1; M2, R2; M3, R3) namely a measurement frequency (M1, M2, M3) and a reference frequency (R1, R2, R3), said reference frequency being chosen so that absorption by the gas to be analysed is less at the reference frequency than at the measurement frequency.

8. A method according to claim 7 characterized by the step of employing said datum means (50-60) to obtain a value relating to the intensity of said radiation as sensed by said radiation sensor (32) at a scale datum point (G) in which the radiation passes through a gas cell (54, 56, 58), the gas cell containing a gas having a high absorption characteristic with respect to said radiation as compared with the gas component being analyzed, whereby the radiation sensed by said sensor is largely unaffected by the passage of the radiation through said gas component.

**Patentansprüche**

1. Gasanalysevorrichtung mit

a) einer Strahlungsquelle (13) zum Aussenden von Strahlung durch ein zu analysierendes Gas (12) hindurch,

b) einem Strahlungssensor (32) zum Empfang der Strahlung der Quelle, um die Analyse des Gases (12) zu ermöglichen,

c) einer Referenzvorrichtung (50-60), die so angeordnet werden kann, daß sie die Strahlung der Quelle abfängt und sie bei einem Referenz- oder Bezugswert zur Ermöglichung der Analyse des Gases (12) zum Sensor überträgt;

d) wobei die Referenzvorrichtung (50-60) ein drehbares Referenzrad (20) mit Referenzelementen (52, 62) zum periodischen Abfangen der Strahlung bei der Drehung des Referenzrades umfaßt und somit die Gasanalyse ermöglicht; und wobei

e) das drehbare Referenzrad (20) in der Referenzvorrichtung (50-60) mindestens eine Gas enthaltende, auf dem Rad angeordnete Strahlungzübertragungszelle (54, 56, 58) enthält, die die Strahlung der Quelle bei Drehung des Rades periodisch abfängt, wobei die durch die Zelle übertragene Strahlung die Kalibrierung der Vorrichtung bezüglich des zu analysierenden Gases erlaubt,

dadurch **gekennzeichnet**, daß die Referenzvorrichtung (52-60) einen Spiegel (52) oder eine ähnliche Strahlungsreflexions- oder Strahlungsübertragungsvorrichtung zur direkten Reflexion oder Übertragung der Strahlung zum Sensor enthält, ohne daß diese die Probe passiert.

2. Vorrichtung nach Anspruch 1 oder 2, dadurch **gekennzeichnet**, daß die Referenzvorrichtung (50-60) so angeordnet ist, daß sie die Strahlung vor und nach deren Durchtritt durch das zu analysierende Gas abfängt.

3. Vorrichtung nach einem der vorhergehenden Ansprüche, dadurch **gekennzeichnet**, daß die Referenzvorrichtung eine Blendenvorrichtung (60) umfaßt, so daß die Strahlung unbeeinflußt zum Sensor gelangt.

4. Vorrichtung nach einem der Ansprüche 1 bis 3, **gekennzeichnet** durch ein in einen Fluß von zu analysierenden Gas einfügbares Sondenelement (36), das poröses, für das zu analysierende Gas (12) durchdringbares Material enthält, welches das Eindringen bestimmter Materie jedoch verhindert, wobei diese Sonde (12) so gestaltet ist, daß sie die Strahlung für die Analyse des Gases (12) empfängt.

5. Vorrichtung nach einem der vorhergehenden Ansprüche, **gekennzeichnet** durch eine Strahlungzübertragungsvorrichtung (26) zum Empfangen der Strahlung der Quelle (13) und zum Übertragen derselben zum Strahlungssensor (32), wobei die Strahlungsübertragungsvorrichtung (26) mit einer Heizvorrichtung (42) zur Erhöhung ihrer Temperatur während des Betriebs ausgestattet ist.

6. Verfahren zur Gazanalyze, bei dem die Vorrichtung nach Anspruch 1 verwendet wird.

7. Verfahren nach Anspruch 6, **gekennzeichnet** durch die Schritte, eine Referenzvorrichtung (50-60) zu verwenden, um eine Reihe von Werten bezüglich der vom Strahlungssensor (32) gemessenen Strahlungsintensität auf zumindest zwei unterschiedliche Arten zu erhalten, nämlich:

a) einen Standard- oder Referenzwert (M), bei dem ein Spiegel oder eine ähnliche optische Vorrichtung der Referenzvorrichtung die Strahlung direkt zum Sensor reflektiert oder überträgt, ohne das zu analysierende Gas oder dessen Hauptkörper zu passieren; und

b) einen Meßwert (H), bei dem die Strahlung das zu analysierende Gas (12) passieren kann, wobei eine bestimmte Absorption stattfindet;

wobei diese Messungen bei zwei Frequenzen (M1, R1; M2, R2; M3, R3) stattfinden, nämlich einer Meßfrequenz (M1, M2, M3) und einer Bezugsfrequenz (R1, R2, R3), wobei die Bezugsfrequenz so gewählt ist, daß die Absorption durch das zu analysierende Gas bei der Bezugsfrequenz geringer ist als bei der Meßfrequenz.

8. Verfahren nach Anspruch 7, **gekennzeichnet** durch den Schritt, eine Referenzvorrichtung (50-60) zu verwenden, um einen Wert zu erhalten, der sich auf die vom Strahlungssensor (32) bei einem Bezugsmeßpunkt (G) erfaßte Strahlung bezieht, bei dem die Strahlung eine Gaszelle (54, 56, 58) durchsetzt, wobei die Gaszelle ein Gas enthält, das, verglichen mit dar zu analysierenden Gaskomponente, hohe Absorptionseigenschaften hat, wobei die vom Sensor erfaßte Strahlung durch den Durchtritt der Strahlung durch die Gaskomponente größtenteils unbeeinflußt ist.

**Revendications**

1. Appareil d'analyse de gaz, comprenant :

a) une source (13) de rayonnement destinée à transmettre un rayonnement à travers un gaz (12) qui doit être analysé,

b) un capteur (32) de rayonnement destiné à recevoir le rayonnement de la source pour permettre l'analyse du gaz (12), et

c) un dispositif (50 à 60) de référence qui peut être disposé afin qu'il intercepte le rayonnement de la source et transmette le rayonnement vers le capteur à une valeur de référence afin qu'il permette l'analyse du gaz (12),

d) le dispositif de référence (50 à 60) comprenant une roue rotative (20) de référence ayant des éléments de référence (52, 62) destinés à intercepter périodiquement le rayonnement lorsque la roue de référence tourne et à permettre ainsi l'analyse du gaz, et

e) la roue rotative (20) de référence comprend, dans les dispositifs de référence (50, 60), au moins une cellule (54, 56, 58) de transmission du rayonnement qui contient un gaz, placée sur la roue afin que cette cellule soit présentée périodiquement au rayonnement de la source pour l'intercepter lorsque la roue tourne, si bien que le rayonnement transmis par la cellule permet l'étalonnage de l'appareil pour le gaz à analyser,

caractérisé en ce que le dispositif de référence (52, 60) comporte un miroir (52) ou un dispositif analogue qui réfléchit ou transmet le rayonnement, destiné à réfléchir ou transmettre le rayonnement directement au capteur sans traverser l'échantillon.

2. Appareil selon la revendication 1, caractérisé en ce que le dispositif de référence (50 à 60) est disposé afin qu'il intercepte le rayonnement avant et après le passage de celui-ci à travers le gaz à analyser.

3. Appareil selon l'une des revendications précédentes, caractérisé en ce que le dispositif de référence comporte des moyens (60) formant ouverture, si bien que le rayonnement peut passer vers le capteur sans être affecté par ces moyens.

4. Appareil selon l'une quelconque des revendications 1 à 3, caractérisé par un organe à sonde (36) destiné à être introduit dans un courant de gaz à analyser, l'organe à sonde (36) comprenant un matériau poreux qui est perméable au gaz (12) à analyser, et qui limite l'entrée de matière particulaire, la sonde (12) étant destinée à recevoir le rayonnement pour analyser le gaz (12).

5. Appareil selon l'une quelconque des revendications précédentes, caractérisé par un dispositif (26) de transmission de rayonnement destiné à recevoir le rayonnement de la source (13) et à le transmettre vers le capteur (32) de rayonnement, le dispositif (26) de transmission de rayonnement comportant un dispositif (42) de chauffage destiné à élever sa température pendant l'utilisation.

6. Procédé d'analyse de gaz mettant en oeuvre l'appareil selon la revendication 1.

7. Procédé selon la revendication 6, caractérisé par des étapes d'utilisation du dispositif de référence (50 à 60) pour l'obtention d'une série de valeurs relatives à l'intensité du rayonnement détecté par le capteur de rayonnement (32) dans au moins deux conditions différentes, c'est-à-dire :

a) une valeur normale ou de référence (M) dans laquelle un miroir ou dispositif optique analogue du dispositif de référence réfléchit ou transmet directement le rayonnement vers le capteur sans passer à travers le gaz à analyser ou sans passer à travers son corps principal, et

b) une valeur (H) de mesure dans laquelle le rayonnement peut traverser le gaz (12) à analyser, et un degré d'absorption est produit de cette manière,

les mesures étant réalisées à deux fréquences (M1, R1 ; M2, R2 ; M3, R3), c'est-à-dire une fréquence de mesure (M1, M2, M3) et une fréquence de référence (R1, R2, R3), la fréquence de référence étant choisie afin que l'absorption par le gaz à analyser à la fréquence de référence soit inférieure à celle qui est obtenue à la fréquence de mesure.

8. Procédé selon la revendication 7, caractérisé par une étape d'utilisation du dispositif de référence (50 à 60) pour l'obtention d'une valeur relative à l'intensité du rayonnement détecté par le capteur de rayonnement (32) en un point (G) de référence d'échelle auquel le rayonnement passe à travers une cellule de gaz (54, 56, 58), la cellule de gaz contenant un gaz ayant une caractéristique élevée d'absorption du rayonnement par rapport au constituant gazeux analysé, si bien que le rayonnement détecté par le capteur n'est pas affecté de façon importante par le passage du rayonnement dans ledit constituant gazeux.

FIG.1

FIG.2

FIG.3

FIG.4

FIG.5

FIG.6